# EUROPÄISCHE PATENTSCHRIFT

(11) **EP 0 430 058 B1**
(45) Veröffentlichungstag und Bekanntmachung des Hinweises auf die Patenterteilung: **22.09.1993**
(21) Anmeldenummer: 90122274.5
(22) Anmeldetag: 22.11.1990
(51) Int. Cl.: B62B 3/12, B62B 3/10

(54) **Mit seinesgleichen schachtelbarer Schubgepäckwagen**
Nestable luggage cart
Chariot à bagages encastrables

(30) Priorität: 27.11.1989 DE 3939173
(43) Veröffentlichungstag der Anmeldung: 05.06.1991
(73) Patentinhaber: EXPRESSO DEUTSCHLAND TRANSPORTGERÄTE GmbH, D-34123 Kassel (DE)
(72) Erfinder: EXPRESSO DEUTSCHLAND TRANSPORTGERÄTE GmbH, D-34123 Kassel (DE)
(74) Vertreter: Schön, Theodor, Patent- und Zivilingenieur

(56) Entgegenhaltungen:
- DE-A- 3 128 067
- FR-A- 2 202 485
- FR-E- 91 076
- US-A- 2 689 132
- US-A- 3 015 494
- US-A- 4 733 877

## Beschreibung

Die Erfindung bezieht sich auf einen mit seinesgleichen schachtelbaren Schubgepäckwagen, bestehend aus einer von einem in der Draufsicht U-förmigen, vorderendig über eine Lenkrolle und hinterendig über zwei Bockrollen gegen den Boden abgestützten Rahmen umgrenzten, im wesentlichen durch Auflagerstäbe gebildeten Ladefläche und einem über den beiden Bockrollen aufragenden Schieberahmen.

Solche Schubgepäckwagen werden vor allem auf Bahnhöfen oder Flughäfen in großer Anzahl bereit gehalten, um den Reisenden den Transport ihres Gepäckes vom Massentransportmittel, Zug oder Flugzeug, zum individuellen Transportmittel, insbesondere Kraftfahrzeug , zu erleichtern. Daraus resultiert, daß aus Gründen der auf Bahnhöfen oder Flugplatzen gegebenen begrenzten räumlichen Verhältnisse die Schubgepäckwagen in größeren Wagenpulks bereit gehalten werden müssen, was ein Ineinanderschachteln bzw. Ineinanderschieben der zu bevoratenden Wagen erforderlich macht. Um eine Anzahl zu einem Pulk ineinandergeschachtelter Wagen z.B. vom Sammelort zum Einsatzort verfahren zu können ist es dabei notwendig, daß die hinteren starr angeordneten Bockrollen der Wagen beim Ineinanderschachteln der Wagen vom Boden abgehoben werden.

Eine aus der US-PS 4 733 877 bekannte Bauart eines solchen Schubgepäckwagens zeichnet sich dadurch aus, daß eine von der Lenkrolle zu den Bockrollen hin abfallend angeordnete Ladefläche aus einer Anzahl geradlinig ausgerichteter, vorder- und hinterendig gegen einen in der Draufsicht U-förmigen Ladeflächenrahmen abgestützter Auflagerstäbe gebildet ist, wobei im mittleren Bereich der Ladefläche ein Einschubraum für die Lenkrolle des einzuschiebenden Wages freigehalten ist. Um beim Ineinanderschieben der einzelnen Wagen ein Anheben der Bockrollen des jeweils vorangehenden Wagens zu erzwingen ist bei dieser Bauart von Schubgepäckwagen ein oberhalb der Ladefläche und diese über die Bockrollen hinaus nach hinten überragend angeordneter, sowie schräg nach oben angestellter Querbügel vorgesehen, welcher beim Einschieben eines nachfolgenden Wagens an der Vorderkante dessen Ladeflächenrahmens zur Auflage kommt und dadurch ein Anheben der Bockrollen des voraufgehenden Wagens erzwingt. Infolge des Umstndes, daß bei dieser Bauart von Schubgepäckwagen der das Anheben der Bockrollen des voraufgehenden Wagens bewirkende bzw. erzwingende Querbüglel oberhalb des hinteren Bereiches Ladefläche des einzuschiebenden Wagens angeordnet sein muß werden die Bockrollen des voraufgehenden Wagens nach einem anfänglichem Anheben mit zunehmendem Einschieben des einzuschiebenden Wagens wieder nach unten abgesenkt, so daß sie im ungünstigen Falle wieder in Bodenberührung kommen und daher bereits ein geradliniges Verschieben einer Anzahl zu einem Pulk ineinandergeschobener Wagen sehr erschwert, ein Querverschieben eines solchen Pulkes ineinandergeschobener Wagen jedoch ausgeschlossen ist. Nachteilig bei der bekannten Bauart eines Schubgepäckwagens ist ferner der Umstand, daß der Querbügel beim Ineinanderschieben der Wagen über eine verhältnismäßig große Länge hin auf den die Ladefläche bildenden Auflagerstäben bzw. auf dem Ladeflächenrahmen schleift, sodaß auch das Ineinanderschieben der Wagen, insbesondere bei älteren Wagen, an sich schon einen beträchtlichen Kraftaufwand erfordert. Außerdem erfordert die zusätzliche Anordnung eines Querbügels einen höheren herstellungsaufwand.

Bei einer weiteren bekannten Bauart DE-S 31 28 067 derartiger Schubgepäckwagen umgrenzen die die Ladefläche bildenden Auflagerstäbe einen in der Draufsicht von der reinen Kreisform abweichenden, insbesondere rhombenförmigen Einschub- Freiraum für die Lenkrolle des einzuschiebenden Wagens und sind die die Ladefläche bildenden Auflagerstäbe dementsprechend an mehreren Stellen starr mit den Längsholmen des die Ladefläche umgrenzenden Rahmens verbunden. Da bei dieser bekannten Bauart von Schubgepäckwagen ferner die Ladefläche in wenigstens annähernd horizontaler Ausrichtung im Bereich einer etwa in Höhe der Laufrollenachsen des Wagens verlaufenden Ebene angeordnet ist muß beim Ineinanderschachteln zweier Wagen der voraufgehende Wagen beginnend mit dem Einschieben des folgenden Wagens über die gesamte vorgesehene Einschublänge hin angehoben werden, wozu die Wagen im Bereich ihrer hinteren Bockrollen quergerichtete, zum Ladeflächenrahmen und zum Schieberahmen hin abgestützte und mit einer Verkleidung aus einem kunststoffmaterial versehene Schenkel aufweisen, die beim Einschieben des folgenden Wagens von den Seitenholmen dessen Ladeflächenrahmens unterlaufen werden und auf diesen über den gesamten Einschubweg hin gleiten. Daraus resultiert naturgemäß, daß das Einschieben des folgenden Wagens einen gewissen Kraftaufwand erfordert, zumal nach längerer Betriebszeit einerseits die Kunststoffummantelung der Schenkel und zum anderen die Kunststoffumkleidung der Längsholme des Ladeflächenrahmens rauh werden und damit infolge größerer Reibung auch ein erhöhter Kraftaufwand beim Ineinanderschieben der Wagen erforderlich wird. Weiterhin erfordert die bekannte Anordnung der Schenkel im Bereich der hinteren Bockrollen wegen der erforderlichen Abstützungen einerseits zum Ladeflächenrahem und andererseits zum Schieberahmen einen nicht unbeträchtlichen Herstellungsaufwand.

Der Erfindung liegt daher die Aufgabe zugrunde, einen Schubgepäckwagen der eingangs genannten Bauart dahingehend zu verbessern, daß der erforderliche Herstellungsaufwand verringert und das Ineinanderschieben der Wagen erleichtert wird.

Diese Aufgabe wird erfindungsgemäß im wesentlichen dadurch gelöst, daß die Ladefläche durch zwei parallele und zwischen sich einen längsgerichteten Einschubraum für die Lenkrolle des einzuschiebenden Wagens einschließende Auflagerstäbe gebildet und insgesamt zu den hinteren Bockrollen hin nach unten abfallend angeordnet ist, wobei die die Ladefläche bildenden Auflagerstäbe im Bereich ihres hinteren Endes jeweils über eine Stützstrebe (16) gegen den Ladeflächenrahmen abgestützt und die diese Abstützung überragenden, freien Enden der Auflagerstäbe nach oben abgewinkelt sind. Dabei sind die die Ladefläche bildenden Auflagerstäbe als geradlinige Rundmaterialstäbe ausgebildet, so daß sie aus einfachen Materialzuschnitten gebildet werden können und sich ein geradliniger Einschubraum für die Lenkrolle des einzuscheibenden Wagens ergibt, wodurch beim Trennen der Wagen ein Verhaken oder dergl. Widerstände ausgeschlossen sind. Insbesondere wird aber durch die erfindungsgemäße Gestaltung erreicht, daß der folgende Wagen über den größten Teil des Einschubweges hin freigängig in den voraufgehenden Wagen eingeschoben werden kann und das Anheben der hinteren Bockrollen des voraufgehenden Wagens erst über den letzten Teil des Einschubweges hin erfolgt.

In bevorzugter Ausgestaltung ist dabei weiterhin vorgesehen, daß die die Ladefläche bildenden Auflagerstäbe zu den Holmen des die Ladefläche umgrenzenden Rahmens mindestens annähernd parallel und in der Ladeflächenebene verlaufend angeordnet und im Bereich ihrer hinterendigen Abwinkelungen über quergerichtete, in der Ladeflächenebene angeordnete Stützstreben am Ladeflächenrahmen abgestützt sind und daß ferner die Auflagerstäbe mit den parallellaufenden Seitenholmen des Ladeflächenrahmens geradlinige längsgerichtete Freiräume einschliessen und daß schließlich an die Auflagerstäbe die Ebene der Ladefläche überragende Abweiser angeschlossen sind.

Um mit einem geringstmöglichen Aufwand beim Ineinanderschachteln der Wagen ein gegenseitiges Ausrichten zwischen dem voraufgehenden und dem einzuschiebenenden Wagen zu erreichen ist dabei nach einem weiteren Merkmal der Erfindung vorgesehen, daß die Abweiser durch Rundmaterialwinkel gebildet und zwei der Ebene der Ladefläche gegenüber wechselweise nach oben und nach unten zeigend angeordnet sind. Besonders zweckmäßig ist es hierbei, daß die in Vorwärtsfahrtrichtung vorne liegenden Abweiser nach unten und die in Vorwärtsfahrtrichtung hinten liegenden Abweiser nach oben gerichtet und im Bereich der nach oben abgwinkelten Enden der Auflagerstäbe angeordnet sind.
Im Zusammenhang damit ist ferner vorgesehen, daß die Auflagerstäbe ausgehend von einer vorderen oberhalb der Lenkrolle angeordneten und die Lagerung der Lenkrolle abstützenden, insbesondere durch einen breiten Blechmaterialstreifen gebildeten Traverse des U-förmigen Ladeflächenrahmens bis zu ihrer hinterendigen Abstützung gegen denselben freitragend angeordnet sind. Zur besseren Stabilität der Ladefläche kann allerdings vorgesehen sein, daß die die Ladefläche bildenden Auflagerstäbe über die Länge der Ladefläche hin zusätzlich durch wenigstens eine außerhalb der Ladeflächenebene angeordnete Strebe gegen die Längsholme des Ladeflächenrahmens abgestützt sind, wobei weiterhin vorgesehen ist, daß die zusätzliche die Auflagerstäbe gegen die Längsholme des Ladeflächenrahmens abstützende Strebe bügelförmig ausgebildet und nach unten ausgerichtet angeordnet ist.

Zum weiteren Erleichtern des Ineinanderschiebens und inbesondere auch Sicherns der ineinandergeschobenen Wagen ist nach einem anderen Merkmal der Erfindung zusätzlich noch vorgesehen, daß die Auflagerstäbe im Bereich ihrer nach oben abgewinkelten Enden unterseitig mit einer aus einem Kunststoffmaterial hergestellten Gleitbahn versehen sind, wobei die Gleitbahn im Bereich ihres vorderen Endes wenigstens eine Rastvertiefung und einen nach unten vorspringenden Endanschlag für den einzuschiebenden Wagen aufweist.

Die Verwirklichung der Erfindung ermöglicht darüberhinaus auch noch eine wesentliche Vereinfachung in der Gestaltung und Herstellung der Schubgepäckwagen dadurch, daß die Längsholme des Ladeflächenrahmens unter hinterendiger Abwinkelung nach oben oberhalb der Ladeflächenebene an den Schieberahmen angeschlossen sind und dieser unterendig etwa in Höhe der Bockrollenjoche über einfache Aussteifungsbleche mit dem Ladeflächenrahmen verbunden ist, wodurch besondere Aussteifungen zwischen Ladeflächenrahmnen und Schieberahmen überflüssig werden. Die Abwinkelungen der Längsholme des Ladeflächenrahmens und der Auflagerstäbe sind dabei zwar etwa in einer gemeinsamen Querachse des Wagens angeordnet, jedoch unterschiedlich ausgebildet, derart, daß die Abwinkelung der Längsholme um ein Mehrfaches stärker ist als diejenige der freien hinteren Enden der Auflagerstäbe der Ladefläche.

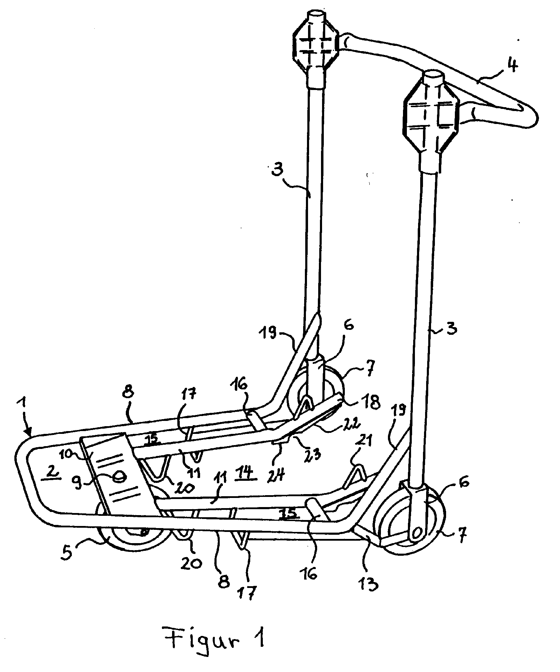

Die Erfindung ist in der nachfolgenden Beispielsbeschreibung anhand eines in der Zeichnung dargestellten Ausführungsbeispieles im Einzelnen beschrieben. In der Zeichnung zeigt die
- Figur 1: eine schaubildliche Darstellung eines erfindungsgemäßen Schubgepäckwagens;

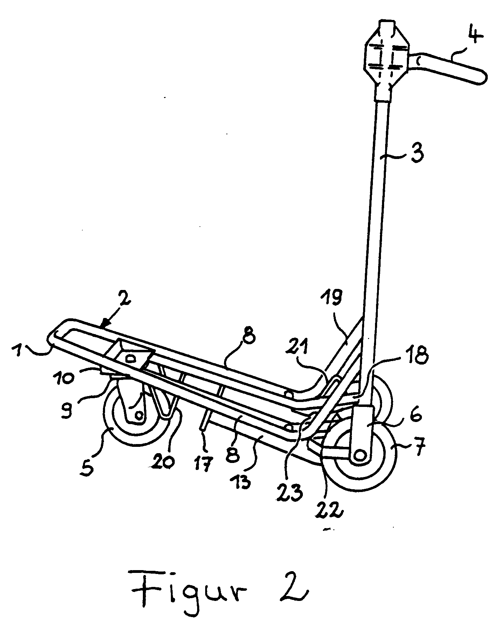

- Figur 2: eine Seitenansicht des Schubgepäckwagens nach Figur 1;

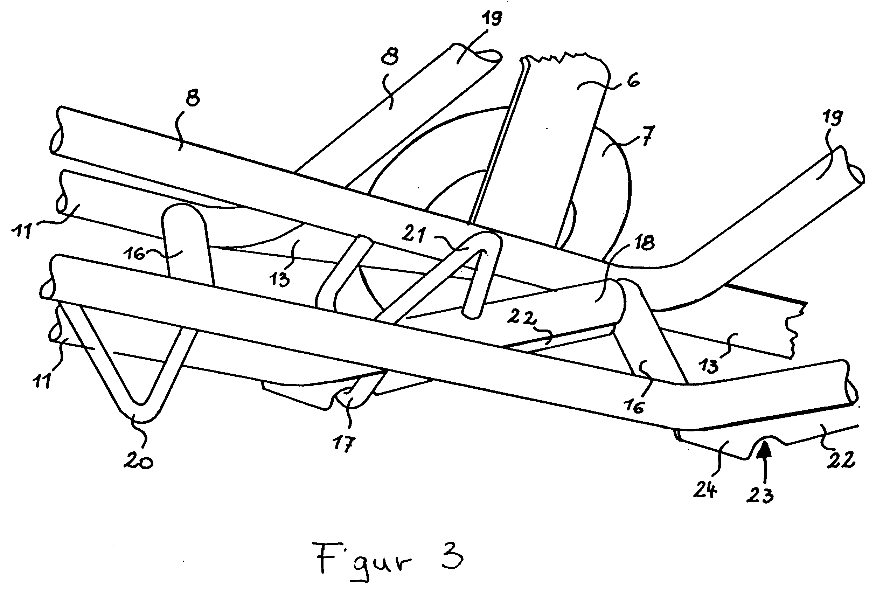

- Figur 3: eine ausschnitweise schaubildliche Darstellung zweier ineinandergeschobener Wagen.

Der in der Zeichnung gezeigte, mit entsprechenden Wagen schachtelbare Schubgepäckwagen besteht im wesentlichen aus einer von einem durch einen entsprechend verformten Rund- insbesondere Rohrmaterialzuschnitt gebildeten U-förmigen Rahmen 1 umgrenzten Ladefläche 2 und einem hinterendig an diese angeschlossenen durch aufragende Holme 3 und einen Schiebebügel 4 gebildeten Schieberahmen sowie einer vorderen durch eine allseitig schwenkbar am Ladeflächenrahmen 1 aufgehängte Laufrolle 5 gebildeten Lenkrolle und zwei hinteren in starr mit den Holmen 3 des Schieberahmens verbundenen Jochen 6 gelagerten Bockrollen 7. Die Ladefläche 2 ist mit einer die beiden Längsholme 8 des Ladeflächenrahmens 1 im Bereich dessen vorderen Endes verbindende, aus Blechmaterial gefertigte und die Schwenklagerung 9 der Lenkrolle 5 lagernde Traverse 10 sowie zwei parallel zu den Längsholmen 8 des Ladeflächenrahmens 1 verlaufende Auflagerstäbe 11 gebildet. Die beiden Längsholme 8 des Ladeflächenrahmens 1 sind im Bereich ihres hinteren Endes 12 nach oben abgewinkelt und oberhalb der Ladeflächenebene an die Holme 3 des Schieberahmens angeschlossen. Die den Schieberahmen bildenden Holme 3 sind in ihrer aufrechten Stellung ferner über die Joche 6 der hinteren Bockrollen 7 mit den Längsholmen 8 des Ladeflächenrahmens 1 verbindende Aussteifungsbleche 13 gestützt. Die die Ladefläche 2 bildenden durch geradlinige Materialzuschnitte gebildeten Auflagerstäbe 11 begrenzen einerseits einen mittig in der Ladefläche 2 vorgesehenen Einschubraum 14 für die Lenkrolle 5 des einzuschiebenden Wagens und schließen andererseits mit dem Längsholmen 8 des Ladeflächenrahmens 1 streifenförmige Freiräume 15 ein. Die Auflagerstäbe 11 sind vorderendig an die Traverse 10 des Ladeflächenrahmens 1 angeschlossen und hinterendig vermittels einer in der Ladeflächenebene angeordneten Strebe 16 gegen die Länsholme 8 des Ladeflächenrahmens 1 abgestützt. Neben dieser Abstützung ist den Auflagerstäben 11 eine zweite Abstützung gegen die Längsholme 8 des Ladeflächenrahmens 1 zugeordnet, die durch einen nach unten gerichteten U-förmigen Bügel 17 gebildet und etwa mittig zur Ladeflächenlänge angeordnet ist. Ferner sind die Auflagerstäbe 11 im Bereich ihrer freien hinteren Enden 18 ebenfalls nach oben abgewinkelt, jedoch um einen wesentlich geringeren Betrag als die Längsholme 8 des Ladeflächenrahmens 1. Die Abwinkelungen 19 der Längsholme 8 des Ladeflächenrahmens 1 und der hinteren Enden 18 der Auflagerstäbe 11 sind im Bereich einer gemeinsamen Querachse angeordnet. Weiterhin sind an den Auflagerstäben 11 jeweils zwei Abweiserv20 und 21 befestigt, die im gezeigten Ausführungsbeispiel durch V-förmig abgewinkelte Rundmaterialzuschnitte gebildet sind und deren einer 20 im vorderen Bereich der Ladefläche 2 und nach unten zeigend und deren anderer 21 im nach oben abgewinkelten Bereich 18 der Auflagerstäbe 11 und nach oben zeigend angeordnet ist. Die Auflagerstäbe 11 sind im Bereich ihrer nach oben abgewinkelten Enden 18 unterseitig mit einer aus einem Kunststoffmaterial hergestellten Gleitbahn 22 versehen sind, wobei die Gleitbahn 22 im Bereich ihres vorderen Endes wenigstens eine Rastvertiefung 23 und einen nach unten vorspringenden Endanschlag 24 für den einzuschiebenden Wagen aufweist.

## Patentansprüche

1. Mit seinesgleichen schachtelbarer Schubgepäckwagen, bestehend aus einer von einem in der Draufsicht U-förmigen, vorderendig über eine Lenkrolle (5) und hinterendig über zwei Bockrollen (7) gegen den Boden abgestützten Rahmen (1) umgrenzten, im wesentlichen durch Auflagerstäbe (11) gebildeten Ladefläche (2) und einem über den beiden Bockrollen (7) aufragenden Schieberahmen, dessen Ladefläche (2) durch zwei zu den Längsholmen (8) des die Ladefläche (2) umgrenzenden Rahmens (1) parallele und zwischen sich einen längsgerichteten Einschubraum (14) für die Lenkrolle (5) des einzuschiebenden Wagens einschliessende Auflagerstäbe (11) gebildet ist, dadurch gekennzeichnet, daß die Ladefläche (2) insgesamt zu den hinteren Bockrollen (7) hin nach unten abfallend angeordnet ist und die die Ladefläche (2) bildenden Auflagerstäbe (11) im Bereich ihres hinteren Endes jeweils über eine Stützstrebe (16) gegen den Ladeflächenrahmen abgestützt und die diese Abstützung (16) überragenden, freien Enden (18) der Auflagerstäbe nach oben abgewinkelt sind.

2. Schubgepäckwagen nach Anspruch 1, dadurch gekennzeichnet, daß an die Auflagerstäbe (11) die Ebene der Ladefläche (2) überragende Abweiser (20,21) angeschlossen sind.

3. Schubgepäckwagen nach Anspruch 1 und 2, dadurch gekennzeichnet, daß die Abweiser (20,21) durch Rundmaterialwinkel gebildet und der Ebene der Ladefläche (2) gegenüber wechselweise nach oben und nach unten zeigend angeordnet sind.

4. Schubgepäckwagen nach Anspruch 1 bis 3, dadurch gekennzeichnet, daß die in Vorwärtsfahrtrichtung vorne liegenden Abweiser (20) nach unten und die in Vorwärtsfahrtrichtung hinten liegenden Abweiser (21) nach oben gerichtet sind.

5. Schubgepäckwagen nach Anspruch 1 bis 4, dadurch gekennzeichnet, daß die in Fahrtrichtung hinten liegenden Abweiser (21) im Bereich der nach oben abgwinkelten Enden (18) der Auflagerstäbe (11) angeordnet sind.

6. Schubgepäckwagen nach Anspruch 1 bis 5, dadurch gekennzeichnet, daß die Auflagerstäbe (11) ausgehend von einer vorderen oberhalb der Lenkrolle (5) angeordneten Traverse (10) des U-förmigen Ladeflächenrahmens (1) bis zu ihrer hinterendigen Abstützung (16) gegen denselben freitragend angeordnet sind.

7. Schubgepäckwagen nach Anspruch 1 bis 6, dadurch gekennzeichnet daß die Auflagerstäbe (11) im Bereich ihrer nach oben abgewinkelten Enden (18) unterseitig mit einer aus einem Kunststoffmaterial hergestellten Gleitbahn (22) versehen sind, wobei die Gleitbahn (22) wenigstens eine Rastvertiefung (23) und einen nach unten vorspringenden Endanschlag (24) für den einzuschiebenden Wagen aufweist.

8. Schubgepäckwagen nach Anspruch 1 bis 7, dadurch gekennzeichnet, daß die die Ladefläche (2) bildenden Auflagerstäbe (11) über die Länge der Ladefläche (2) hin zusätzlich durch wenigstens eine außerhalb der Ladeflächenebene angeordnete Strebe (17) gegen die Längsholme (8) des Ladeflächenrahmens (1) abgestützt sind.

9. Schubgepäckwagen nach Anspruch 1 bis 8, dadurch gekennzeichnet, daß die zusätzliche die Auflagerstäbe (11) gegen die Längsholme (8) des Ladeflächenrahmens (1) abstützende Strebe (17) bügelförmig ausgebildet und nach unten ausgerichtet angeordnet ist.

10. Schubgepäckwagen nach Anspruch 1 bis 9, dadurch gekennzeichnet, daß die Längsholme (8) des Ladeflächenrahmens (1) unter hinterendiger Abwinkelung (19) nach oben oberhalb der Ladeflächenebene an den Schieberahmen angeschlossen sind und dieser unterendig etwa in Höhe der Bockrollenjoche (6) über einfache Aussteifungsbleche (13) mit dem Ladeflächenrahmen (1) verbunden ist.

11. Schubgepäckwagen nach Anspruch 1 bis 10, dadurch gekennzeichnet, daß die Abwinkelungen (19) der Längsholme (8) des Ladeflächenrahmens (1) und der Auflagerstäbe (11) zwar etwa in einer gemeinsamen Querachse des Wagens angeordnet sind, jedoch unterschiedlich ausgebildet sind, derart, daß die Abwinkelung (19) der Längsholme (8) um ein Mehrfaches größer ist als diejenige der freien hinteren Enden (18) der Auflagerstäbe (11) der Ladefläche (2).

## Claims

1. Nesting luggage trolley consisting of a load area (2) essentially made up of supporting bars (11) and confined by a U-shaped frame, as seen from the top, and being carried on the floor by a castor (5) at the front and by two rigid rollers (7) at the rear, as well as of a push-frame rising above the two rigid rollers (7), whose load area (2) is formed by two supporting bars (11) which run parallel to the longitudinal bars (8) confining the load area (2) and enclose a longitudinal open space to fit in the castor of the trolley to be nested, characterized by the design features that the load area (2) slopes down-wards toward the rear rigid rollers (7), that each of the supporting bars (11) forming the load area (2) is connected with the load area frame by a crosspiece (16) in the area of the rear end of the bar, and that the free ends (18) of the supporting bars projecting over such crosspieces (16) curve upward.

2. Nesting luggage trolley in accordance with Claim 1 characterized by the design feature that spacers (20, 21) are fitted on the supporting bars (11) which project over the plane of the load area (2).

3. Nesting luggage trolley in accordance with Claims 1 and 2 characterized by the design features that the spacers (20, 21) are made of round material bent at an angle and arranged so as to alternately point upward and downward with regard to the plane of the load area (2).

4. Nesting luggage trolley in accordance with Claims 1 to 3 characterized by the design feature that the spacers (20) located at the front of the forward moving trolley point downward and the spacers (21) located at the rear of the forward moving trolley point upward.

5. Nesting luggage trolley in accordance with Claims 1 to 4 characterized by the design feature that the spacers (21) located at the rear of the forward moving trolley are provided in the area of the upward curving ends of the supporting bars (11).

6. Nesting luggage trolley in accordance with Claims 1 to 5 characterized by the design feature that the supporting bars (11) are self-supporting with regard to the load area frame (1) over the whole distance between the transverse (10) located across the front portion of the U-shaped load area frame (1) above the castor (5) and the crosspieces (16) securing their rear ends.

7. Nesting luggage trolley in accordance with Claims 1 to 6 characterized by the design feature that in the area of their upward curving ends the supporting bars (11) are provided with plastic runners (22) from underneath, each runner (22) having at least one recess (24) and one limit stop (24) projecting toward the floor in order to check the movement of the trolley being nested.

8. Nesting luggage trolley in accordance with Claims 1 to 7 characterized by the design feature that over the length of the load area (2) each of the supporting bars (11) forming the load area (2) is connected with the longitudinal bars (8) of the loading area frame (1) by at least one additional support (17) located outside the plane of the load area.

9. Nesting luggage trolley in accordance with Claims 1 to 8 characterized by the design feature that the additional supports (17) connecting the supporting bars (11) with the longitudinal bars (8) of the load area frame (1) are bow-shaped and located so as to point toward the floor.

10. Nesting luggage trolley in accordance with Claims 1 to 9 characterized by the design features that the longitudinal bars (8) of the load area frame (1) provided with upward curving ends at the rear are attached to the push-frame above the plane of the load area, and that the push-frame is connected with the load area frame (1) by means of simple sheet steel stiffeners (13) fixed to the lower ends of the uprights approximately at the level of the yoke (6) holding the rigid rollers in position.

11. Nesting luggage trolley in accordance with Claims 1 to 10 characterized by the design feature that the curving portions (19) of the longitudinal bars (8) of the load area frame (1) and those of the supporting bars (11) are indeed nearly arranged on a common lateral axis of the trolley, but have such different shapes that the bend described by the rear ends (19) of the longitudinal bars (8) is distinctly more pronounced than that of the free rear ends (18) of the supporting bars (11) of the load area (2).

## Revendications

1. Chariot à bagages à pousser pouvant être emboîté avec d'autres chariots du même type, comprenant d'une part une surface de chargement (2) formée essentiellement de barres d'appui (11) et délimitée par un cadre (1) en forme de U (vu de dessus) qu'une roue directrice (5) à l'avant et deux roues fixes (7) à l'arrière séparent du sol, et comprenant d'autre part un cadre à pousser s'élevant au-dessus des deux roues fixes (7), la surface de chargement du chariot (2) étant formée de deux barres d'appui (11) parallèles aux longerons (8) du cadre (1) délimitant la surface de chargement (2), ces deux barres d'appui entourant elles-mêmes de part et d'autre une zone d'emboîtement (14) longitudinale pour la roue directrice (5) d'un autre chariot que l'on désire emboîter,
caractérisé en ce que la surface de chargement (2) est, dans son ensemble, inclinée vers le bas jusqu'aux roues fixes (7) situées à l'arrière, qu'au niveau de leur extrémité postérieure, chacune des barres d'appui (11) formant la surface de chargement (2) est maintenue contre l'encadrement de cette dernière par une entretoise de soutien (16) et que les extrémités libres (18) des barres d'appui situées au-dessus des entretoises (16) sont coudées vers le haut.

2. Chariot à bagages à pousser selon la revendication 1,
caractérisé en ce qu'aux barres d'appui (11) on a adjoint des butoirs (20, 21) sortant du plan de la surface de chargement (2).

3. Chariot à bagages à pousser selon les revendications 1 et 2,
caractérisé en ce que les butoirs (20, 21) sont réalisés en tube coudé en V et disposés alternativement vers le haut et vers le bas, par rapport au plan de la surface de chargement (2).

4. Chariot à bagages à pousser selon les revendications 1 à 3,
caractérisé en ce que les butoirs placés devant dans le sens de la marche (20) sont orientés vers le bas et que ceux qui sont placés derrière dans le sens de la marche (21) sont orientés vers le haut.

5. Chariot à bagages à pousser selon les revendications 1 à 4,
caractérisé en ce que les butoirs placés derrière dans le sens de la marche (21) se situent au niveau des extrémités coudées vers le haut (18) des barres d'appui (11).

6. Chariot à bagages à pousser selon les revendications 1 à 5,
caractérisé en ce que les barres d'appui (11) ne sont pas soutenues entre la traverse avant (10) de l'encadrement en forme de U de la surface de chargement (1), traverse surmontant la roue directrice (5), et les entretoises arrière (16) qui les maintiennent contre ce même cadre.

7. Chariot à bagages à pousser selon les revendications 1 à 6,
caractérisé en ce que les barres d'appui (11), au niveau de leur extrémité coudée vers le haut (18), sont munies par dessous d'une glissière (22) en matière plastique, celle-ci présentant au moins une encoche d'encliquetage (23) et une butée de fin de course (24) saillant vers le bas, pour un autre chariot que l'on désire emboîter.

8. Chariot à bagages à pousser selon les revendications 1 à 7,
caractérisé en ce que les barres d'appui (11) formant la surface de chargement (2) sont soutenues sur la longueur de cette surface de chargement (2) encore par au moins une entretoise (17) située en dehors du plan de la surface de chargement, cette entretoise les maintenant contre les longerons (8) de l'encadrement de la surface de chargement (1).

9. Chariot à bagages à pousser selon les revendications 1 à 8,
caractérisé en ce que l'entretoise supplémentaire (17) maintenant les barres d'appui (11) contre les longerons (8) de l'encadrement de la surface de chargement (1) est en forme d'étrier et orientée vers le bas.

10. Chariot à bagages à pousser selon les revendications 1 à 9,
caractérisé en ce que les longerons (8) de l'encadrement de la surface de chargement (2), coudés vers le haut à leur extrémité postérieure (19), sont reliés au cadre à pousser au-dessus du plan de la surface de chargement et en ce que le cadre à pousser est lui-même à son extrémité inférieure relié à l'encadrement de la surface de chargement (1) à peu près au niveau de la fourche des roues fixes (6) par de simples raidisseurs (13).

11. Chariot à bagages à pousser selon les revendications 1 à 10,
caractérisé en ce que les parties coudées (19) des longerons (8) de l'encadrement de la surface de chargement (1) et celles des barres d'appui (11) sont certes disposées à peu près dans le même axe oblique par rapport au chariot, mais avec une configuration différente dans la mesure où le coude (19) des longerons (8) est bien plus prononcé que celui des extrémités libres postérieures (18) des barres d'appui (11) de la surface de chargement (2).
